# EUROPÄISCHE PATENTSCHRIFT

(11) **EP 2 852 765 B1**
(45) Veröffentlichungstag und Bekanntmachung des Hinweises auf die Patenterteilung: **03.02.2016**
(21) Anmeldenummer: 13747367.4
(22) Anmeldetag: 17.07.2013
(51) Int. Cl.: F16B 5/01, F16B 37/06, F16B 41/00

(54) **VERANKERUNGSEINRICHTUNG, VERBINDUNGSANORDNUNG SOWIE VERFAHREN**
ANCHORAGE DEVICE, CONNECTION ARRANGEMENT AND METHOD
DISPOSITIF D'ANCRAGE, L'ARRANGEMENT CONNEXION ET MÉTHODE

(30) Priorität: 20.07.2012 DE 102012106596
(43) Veröffentlichungstag der Anmeldung: 01.04.2015
(73) Patentinhaber: Flaig, Hartmut, 78554 Aldingen (DE)
(72) Erfinder: HOLSCHER, Winfried K., W., 78234 Engen (DE)
(74) Vertreter: Wagner, Kilian
(86) Internationale Anmeldenummer: PCT/EP2013/065117
(87) Internationale Veröffentlichungsnummer: WO 2014/012984

(56) Entgegenhaltungen:
- DE-A1-102010 026 965
- DE-U1-202011 100 696
- US-A- 3 078 002
- US-A- 3 579 942

## Beschreibung

Die Erfindung betrifft eine Verankerungseinrichtung gemäß dem Oberbegriff des Anspruchs 1 zum Befestigen eines Bauteils an einem Trägerelement, eine unter Verwendung einer derartigen Verankerungseinrichtung hergestellte Verbindungsanordnung gemäß Anspruch 12 sowie ein Verfahren zum Befestigen eines Bauteils an einem Trägerelement gemäß Anspruchs 13 unter Verwendung einer erfindungsgemäßen Verankerungseinrichtung.

Aus der zum Anmeldetag vorliegender Anmeldung noch nicht offengelegten DE 10 2011 002 031 des Anmelders ist eine Verankerungseinrichtung zum Befestigen eines Bauteils an einem Trägerelement bekannt, wobei die Verankerungseinrichtung neben einer in radialer Richtung aufspreizbare Zinnen aufweisenden Spreizhülse eine Aufspreizhülse (Zentrierhülse) umfasst, die in eine Bohrung eines Trägerelementes einbringbar ist. Während des Einbringens sind die Aufspreizhülse und die axial benachbarte Spreizhülse über ein Spanngewindeelement aneinander fixiert, mit welchem die Spreizhülse axial gegen die Aufspreizhülse verspannbar ist, um die Zinnen in radialer Richtung aufzuspreizen, damit sich diese an der Rückseite des Trägerelementes abstützen. Die in vorgenannter Anmeldung beschriebene Verankerungseinrichtung ist zum Einbringen in Sandwich-Trägerelementen ausgebildet und zeichnet sich dadurch aus, dass sich die Spreizhülse mit einem von der Aufspreizhülse abgewandten Ende in einer der Aufnahmebohrung für die Aufspreizhülse gegenüberliegenden Bohrung des Sandwich-Trägerelementes abstützt, um die Verbindung insgesamt zu stabilisieren. Hierdurch wird gleichzeitig verhindert, dass die Spreizhülse nach einem Herausdrehen des Spanngewindeelementes, beispielsweise zum Auswechseln des mit Hilfe der Verankerungseinrichtung fixierten Bauteils im Sandwich-Trägerelement verlorengeht bzw. nach unten fällt.

Ausgehend von dem vorgenannten Stand der Technik liegt der Erfindung die Aufgabe zugrunde, eine mehrteilige Verankerungseinrichtung, umfassend eine Aufspreizhülse und eine Spreizhülse anzugeben, bei der unabhängig von der Ausgestaltung des Trägerelementes ein Herausdrehen eines mit der Verankerungseinrichtung verwendbaren Spanngewindeelementes und ein Wiedereindrehen in das Spreizelement möglich ist. Bevorzugt soll die Verankerungseinrichtung auch zur Verwendung von Nicht-Sandwichmaterial-Trägerelementen oder Rohren geeignet sein - insbesondere soll es nicht notwendig sein, eine weitere Abstützbohrung für die Spreizhülse vorsehen zu müssen, um ein Verlieren der Spreizhülse nach Herausdrehen des Spanngewindeelementes zu verhindern. Ferner besteht die Aufgabe darin eine Verbindungsanordnung mit einer entsprechend optimierten Verankerungseinrichtung sowie ein entsprechend optimiertes Verfahren zum Befestigen eines Bauteils an einem Trägerelement anzugeben.

Diese Aufgabe wird hinsichtlich der Verankerungseinrichtung mit den Merkmalen des Anspruchs 1, hinsichtlich der Verbindungsanordnung mit den Merkmalen des Anspruchs 12 und hinsichtlich des Verfahrens mit den Merkmalen des Anspruchs 13 gelöst. Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen. Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale als vorrichtungsgemäß offenbart gelten und beanspruchbar sein.

Der Erfindung liegt der Gedanke zugrunde, bei einer eine Spreizhülse und eine Aufspreizhülse umfassenden, vorzugsweise daraus bestehenden Verankerungseinrichtung Sicherungsmittel vorzusehen, mittels derer die Aufspreizhülse und die Spreizhülse aneinander gegen axiales Verlieren gesichert sind, indem Aufspreizhülse und Spreizhülse in radialer Richtung ineinandergreifen. Anders ausgedrückt sind die Sicherungsmittel derart ausgebildet, dass zur Sicherung der Spreizhülse gegen axiales Verlieren an der Aufspreizhülse ein Formschluss zwischen diesen Bauteilen ausgebildet und/oder ausbildbar ist, insbesondere, wie später noch erläutert werden wird, indem die an einem Trägerelement festlegbare Aufspreizhülse in radialer Richtung in einen in der Spreizhülse vorgesehenen Hinterschnitt (radiale Vertiefung) eingreift, wodurch ein unbeabsichtigtes Ablösen der Spreizhülse von der Aufspreizhülse auch nach Entfernen eines mit der Verankerungseinrichtung verwendbaren und in ein Innengewinde der Spreizhülse einschraubbaren Spanngewindeelementes sicher verhindert wird. Die nach dem Konzept der Erfindung ausgebildete Verankerungseinrichtung bedarf keiner Abstützung der Spreizhülse mit einem von Spreizzinnen abgewandten Ende in einer (weiteren) Wand eines Trägerelementes - vielmehr ist die erfindungsgemäße Verankerungseinrichtung mit beliebig ausgestalteten, auch plattenförmigen Trägerelementen möglich, auch mit Rohren oder Sandwichelementen, ohne dass es zusätzlich zu der Aufnahmeöffnung für die Aufspreizhülse zum Durchführen der Verankerungseinrichtung einer zusätzlichen Öffnung bedarf. Insbesondere endet die Spreizhülse in einem freien Raum hinter dem Trägerelement.

Besonders zweckmäßig ist eine Ausgestaltung der Sicherungsmittel derart, dass die Axialsicherung erst durch ein gegeneinander Verspannen von Aufspreizhülse und Spreizhülse mit dem mit der Verankerungseinrichtung verwendbaren Spanngewindeelement ausbildbar ist. Anders ausgedrückt sind die Sicherungsmittel weiterbildungsgemäß derart ausgebildet, dass die Spreizhülse und Aufspreizhülse bedingt durch das gegeneinander Verspannen von Aufspreizhülse und Spreizhülse in radialer Richtung ineinandergreifen, um somit die gewünschte axiale Verliersicherung auszubilden. Auch ist eine Ausführungsform realisierbar, bei der die Sicherungswirkung nicht erst durch das Verspannen erzeugt, sondern z.B. nur verstärkt wird, insbesondere in dem die Bauteile durch das Verspannen weiter in radialer Richtung ineinandergreifen.

Zur Erleichterung der Montage hat es sich als vorteilhaft herausgestellt, wenn die Spreizhülse und die Aufspreizhülse bereits vor der Ausbildung der axialen Verliersicherung, d.h. vor einem radialen Ineinandergreifen aneinander vorfixiert sind, beispielsweise reibschlüssig, insbesondere durch eine entsprechende Abstimmung eines Außendurchmesserabschnittes der Aufspreizhülse zu einem korrespondierenden Innendurchmesserabschnitt der Spreizhülse. Zusätzlich oder alternativ kann durch radiale Krafteinwirkung die Rundheit der Aufspreizhülse und/oder der Spreizhülse (negativ) beeinflusst werden bzw. unrund ausgebildet werden, um Aufspreizhülse und Spreizhülse zur Vorfixierung ineinander zu verklemmen. Die Vorfixierung sollte so ausgebildet sein, dass durch Aufbringen einer Verspannkraft, insbesondere mittels eines Spanngewindeelementes, eine Relativbewegung von Spreizhülse und Aufspreizhülse aufeinanderzu möglich ist, insbesondere um hierdurch die axiale Verliersicherung auszubilden.

Als besonders zweckmäßig hat sich eine Ausführung erwiesen, bei welcher die Sicherungsmittel am Innenumfang der Spreizhülse einen Hinterschnitt, d.h. eine radiale Vertiefung umfassen, welcher ein, insbesondere vorderer Materialabschnitt der Aufspreizhülse derart zugeordnet ist, dass dieser durch gegeneinander Verspannen von Spreizhülse und Aufspreizhülse radial in die Vertiefung hineinverstellbar ist, so dass Aufspreizhülse und Spreizhülse in radialer Richtung zur Ausbildung der axialen Verliersicherung ineinandergreifen. Im Hinblick auf die Art und Weise des Verstellens des Materialabschnitts in radialer Richtung gibt es unterschiedliche Möglichkeiten. Gemäß einer ersten Alternative kann der Materialabschnitt in radialer Richtung federnd und vorzugsweise nach radial innen vorgespannt sein, so dass durch Relativverstellen von Aufspreizhülse und Spreizhülse der Materialabschnitt in Überdeckung mit dem Hinterschnitt kommt und in diesen in radialer Richtung nach außen einfedern kann. Gemäß einer zweiten, bevorzugten Alternative wird der Materialabschnitt durch das Relativverstellen von Spreizhülse und Aufspreizhülse plastisch in die Vertiefung hineindeformiert bzw. verformt, um hierdurch die Axialsicherung auszubilden. Bevorzugt wird dies erreicht, indem der Materialabschnitt durch das Relativverstellen von Aufspreizhülse und Spreizhülse gegen eine entsprechende Fläche (Axialanschlag) im Innern der Spreizhülse gedrückt und dadurch in radialer Richtung nach außen deformiert wird.

Ein besonderer Vorteil der deformierbaren Ausgestaltung des Materialabschnittes besteht darin, dass hierdurch ein Indikator für den Benutzer geschaffen wird, der ein ausreichendes axiales Verspannen durch einen entsprechenden Kraftanstieg zur Deformierung des Materialabschnittes signalisiert.

Unterstützt werden kann die radiale Deformierung nach außen durch eine Anfasung des, bevorzugt wesentlichen zylindrischen Materialabschnittes an seinem Innenumfang oder durch eine entsprechend abgestufte Ausgestaltung des Innenumfangs. Zusätzlich oder alternativ kann vorgenannter Axialanschlag entsprechend abgeschrägt ausgestaltet sein, insbesondere zumindest näherungsweise konisch konturiert sein, um somit eine Kraftkomponente nach radial außen zu erzeugen.

Um eine erleichtertes Spannen von Aufspreizhülse und Spreizhülse in axialer Richtung zu ermöglichen, ist in Weiterbildung der Erfindung mit Vorteil vorgesehen, dass die Aufspreizhülse drehfest im Trägerelement aufnehmbar ist, insbesondere durch eine entsprechend gestaltete Oberflächenstruktur der Aufspreizhülse, insbesondere in Form einer umfänglichen Rändelung, die derart ausgebildet ist, dass sie ein Verdrehen der Aufspreizhülse in einer Trägerelementbohrung beim Verschrauben des, vorzugsweise einen Schraubenkopf aufweisenden Spanngewindeelementes verhindert.

Zum erleichterten Aufspreizen der Zinnen der Spreizhülse hat es sich als vorteilhaft herausgestellt, wenn am Außenumfang der Spreizhülse eine entsprechende schräge, insbesondere konusförmige Oberflächenkontur vorgesehen ist. Die Oberflächengestaltung sollte so ausgestaltet sein, dass durch das radiale Relativverstellen von Aufspreizhülse und Spreizhülse eine Radialkraftkomponente auf die Zinnen wirkt.

Als besonders zweckmäßig hat es sich herausgestellt, wenn die Zinnen bei einer mittels der Verankerungseinrichtung hergestellten Verbindungsanordnung bezogen auf die Längserstreckung der Verankerungseinrichtung maximal um einen Winkel von 30°, vorzugsweise maximal von 25°, noch weiter bevorzugt maximal von 20° aufgeweitet sind, um hierdurch eine optimierte Stabilität der Verbindungsanordnung zu ermöglichen. Dem liegt der Gedanke zugrunde, dass die Kraftaufnahmefähigkeit der Verankerungseinrichtung bei zu großem Spreizwinkel sinkt. Um nun den Spreizwinkel auf einen der vorgenannten Werte zu begrenzen, ist weiterbildungsgemäß vorgesehen, dass mit Axialabstand zu einem vorderen in Richtung der Spreizhülse orientierten Ende der Aufspreizhülse ein Axialanschlag zum Anschlagen an einem Gegenanschlag der Spreizhülse vorgesehen ist, wobei die Axialerstreckung der Zinnen derart auf die Relativposition von Axialanschlag und Gegenanschlag abgestimmt ist, dass bei aneinanliegendem Axialanschlag und Gegen(axial)anschlag der maximale Spreizwinkel der Zinnen zur Längserstreckung der Verankerungseinrichtung eingestellt ist.

Die Erfindung führt auch auf eine Verbindungsanordnung, umfassend eine nach dem Konzept der Erfindung ausgebildete Verankerungseinrichtung, wobei die Verbindungsanordnung zusätzlich zu der Verankerungseinrichtung ein mit dieser verwendbares Spanngewindeelement zum miteinander Verspannen der Spreiz- und Aufspreizhülse umfasst, sowie ein eine Aufnahmeöffnung zum Durchführen der Verankerungseinrichtung und zum Festlegen der Aufspreizhülse aufweisendes Trägerelement, an dem mittels der Verankerungseinrichtung des Spanngewindeelementes ein Bauteil festlegbar ist, wobei das Bauteil vorzugsweise zwischen einem Schraubenkopf des Spanngewindeelementes und dem Trägerelement einklemmbar ist und das Spanngewindeelement im Innengewinde der Spreizhülse aufgenommen ist. Spreizhülse und Aufspreizhülse sind mittels des Spanngewindeelementes derart relativ zueinander verspannt, dass sich zum einen die Zinnen der Spreizhülse axial an dem Trägerelement abstützen und dabei in radialer Richtung geweitet sind und gleichzeitig Aufspreizhülse und Spreizhülse in radialer Richtung zur Ausbildung einer Axialsicherung ineinandergreifen, um zu ermöglichen, das Spanngewindeelement zu entfernen, ohne dass sich die Spreizhülse von der Aufspreizhülse löst, so dass das Spanngewindeelement erneut mit dem Innengewinde der Spreizhülse verschraubbar ist.

Die Erfindung führt auch auf ein Verfahren zum Befestigen eines Bauteils an einem Trägerelement, insbesondere zur Herstellung einer wie zuvor beschriebenen ausgebildeten Verbindungsanordnung unter Verwendung einer Verankerungseinrichtung nach dem Konzept der Erfindung. Das Verfahren umfasst die Schritte des Einbringens bzw. Durchsteckens der Aufspreizhülse und der Spreizhülse durch eine Montageöffnung im Trägerelement, welche ggf. in einem vorhergehenden Schritt, beispielsweise durch Bohren hergestellt werden muss und einem gegeneinander Verspannen von Spreizhülse und Aufspreizhülse mittels des Spanngewindeelementes und dadurch radiales Aufspreizen der Zinnen derart, dass diese sich entgegen der Montagerichtung an dem Trägerelement abstützen. Bevorzugt wird gleichzeitig durch das gegeneinander Verspannen von Aufspreizhülse und Spreizhülse die Axialsicherung durch radiales Ineinandergreifen von Aufspreizhülse und Spreizhülse gebildet.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1a bis 1c:: unterschiedliche teilweise geschnittene Ansichten einer Spreizhülse einer Verankerungseinrichtung,
- Fig. 2a bis 2c:: in unterschiedlichen, teilweise geschnittenen Darstellungen eine zugehörige Aufspreizhülse, und
- Fig. 3:: eine unter Verwendung der in den Fig. 1a bis 2c gezeigten Verankerungseinrichtung hergestellte Verbindungsanordnung; zusätzlich umfassend ein Spanngewindeelement, ein Trägerelement und ein am Trägerelement festgelegtes Bauteil.

In den Figuren sind gleiche Elemente und Elemente mit der gleichen Funktion mit den gleichen Bezugszeichen gekennzeichnet. Die in den Figuren angezogenen Bemaßungen sollen nicht beschränkend wirken. Jedoch sollen sich hieraus ergebende, beliebige Maßverhältnisse ausdrücklich als offenbart gelten und beanspruchbar sein.

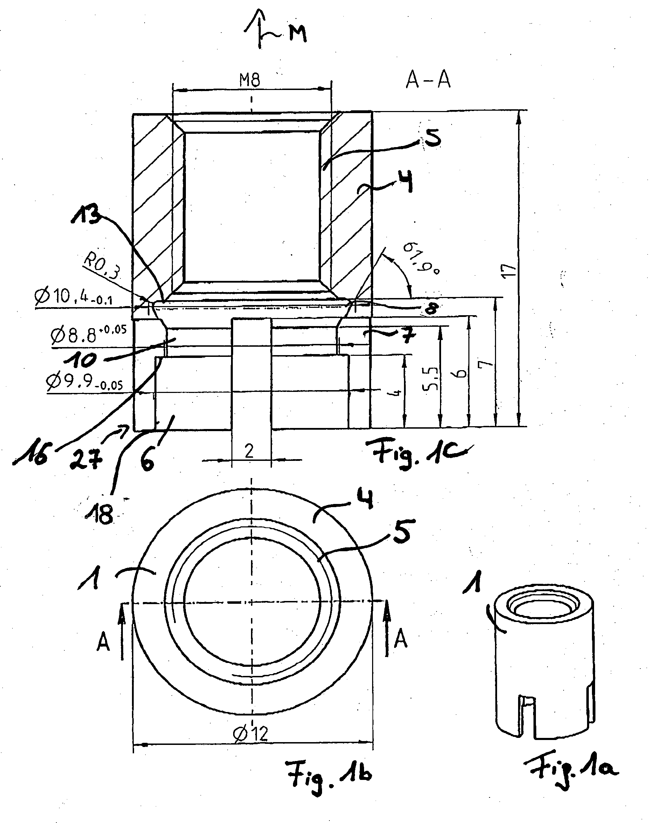

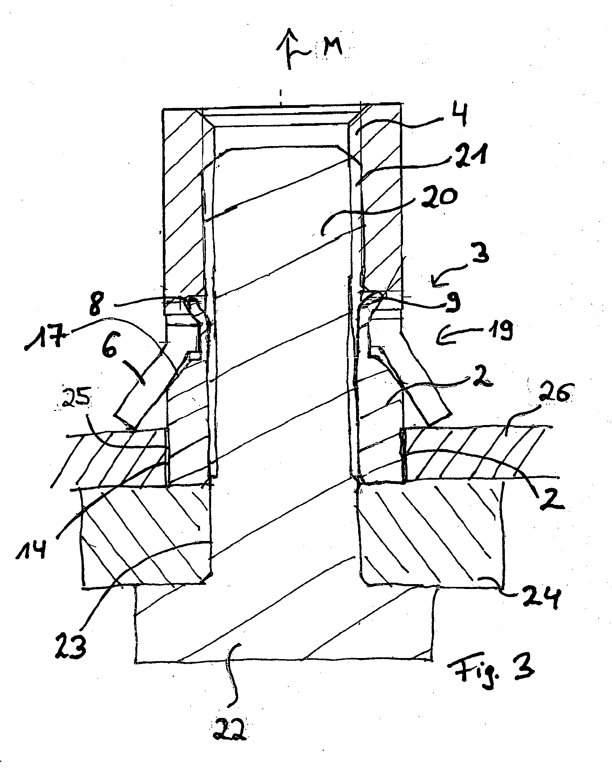

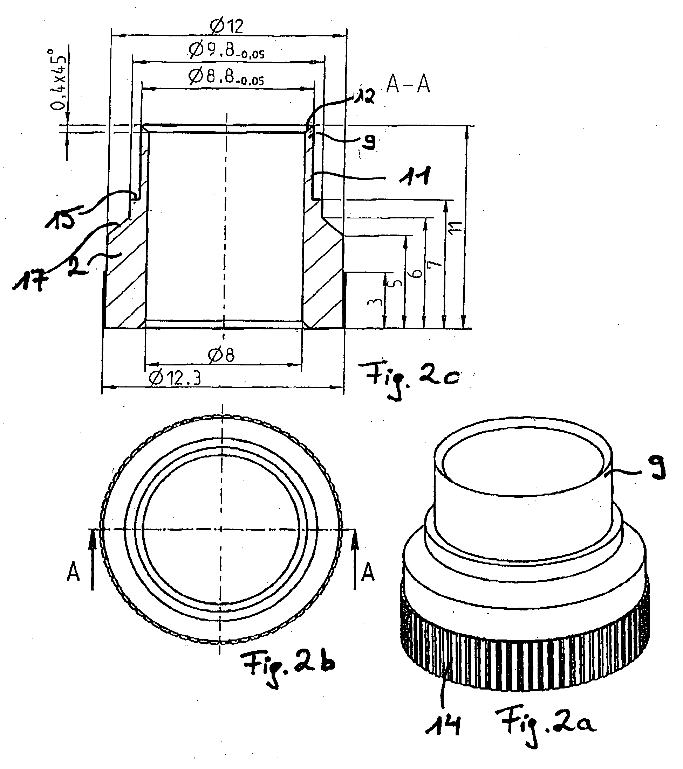

In den Fig. 1a bis 1c ist eine Spreizhülse 1 als Teil einer zusätzlich aus einer in den Fig. 2a bis 2c gezeigten Aufspreizhülse 2 bestehenden Verankerungseinrichtung 3 (s. Fig. 3) gezeigt. Die Spreizhülse 1 ist bezüglich ihres Außenumfangs von zylindrischer Kontur und umfasst einen (vorderen) Innengewindeabschnitt 4 mit Innengewinde 5 sowie einen hinteren Zinnenabschnitt 27, umfassend mehrere in Umfangsrichtung voneinander beabstandete und in radialer Richtung nach außen deformierbare Zinnen 6.

In einem Bereich axial zwischen dem Innengewinde 5 und den Zinnen 6 befindet sich ein Zwischenabschnitt 7 mit einer als Ringnut ausgebildeten Vertiefung 8 (Hinterschnitt), in die ein später noch zu erläuternder, vorderer, hier zylindrischer Materialabschnitt 9 der Aufspreizhülse 2 hineinverstellbar, im konkreten Ausführungsbeispiel hineindefomierbar ist. Die Vertiefung 8 reicht weiter nach radial außen als der Kerndurchmesser des Innengewindes 5 und hintergreift insbesondere einen Innendurchmesser eines benachbarten Aufnahmeabschnitts 10 zur Aufnahme eines Vormontageabschnittes 11 der Aufspreizhülse 2. Wesentlich ist, dass die radiale Vertiefung 8 einen größeren Innendurchmesser aufweist als der Außendurchmesser des Materialabschnitts 9 der Aufspreizhülse 2 im nicht in die Vertiefung 8 hineinverstellten, insbesondere hineindeformierten Zustand.

Wie später noch anhand von Fig. 3 erläutert werden wird, können Spreizhülse 1 und Aufspreizhülse 2 axial gegeneinander verspannt werden, wobei hierdurch der Materialabschnitt 9, der an seinem Innenumfang mit einer Fase 12 versehen ist in einer Montagerichtung M gegen eine ringförmige, d.h. ringschulterartige Anschlagfläche 13 im Inneren der Spreizhülse 1 verstellt und bei einem weiteren axialen Verspannen nach radial außen in den Hinterschnitt, d.h. in die ringförmige Vertiefung 8 hineindeformiert wird, so dass ein radialer Formschluss resultiert, der ein axiales Verlieren der Spreizhülse 1 von der Aufspreizhülse 2 sicher verhindert.

Die in den Fig. 2a bis 2c gezeigte Aufspreizhülse 2 weist in ihrem hinteren Bereich am Außenumfang eine Rändelung 14 auf, die ein Verdrehen der Verankerungseinrichtung in einer entsprechenden Montageöffnung eines Trägerelementes verhindert.

Insbesondere aus den Fig. 2a und 2c ist die geringe Wandstärke des deformierbaren Materialabschnittes 9 zu erkennen, die in dem gezeigten Ausführungsbeispiel weniger als 0,5mm beträgt und jedenfalls so gewählt sein sollte, dass eine entsprechende Deformierung durch axiales Verspannen ermöglicht wird. Die stirnseitige Fase 12 am Innenumfang erleichtert den Deformiervorgang bzw. sorgt für eine Kraftkomponente nach radial außen. Zusätzlich oder alternativ könnte die Anschlagfläche 13 entsprechend nach außen abgeschrägt sein, um eine Radialkraftkomponente nach außen zu erzeugen.

Der Vormontageabschnitt 11 der Aufspreizhülse, dessen Außendurchmesser in etwa dem Innendurchmesser des Aufnahmeabschnittes 10 entspricht, ist so auf diesen Innendurchmesser abgestimmt ist, dass beim Ineinanderstecken von Spreizhülse 1 und Aufspreizhülse 2 eine Reibwirkung erzielt wird, die eine Vorfixierung von Spreizhülse 1 und Aufspreizhülse 2 gewährleistet. Zusätzlich oder alternativ zur Realisierung dieser Reibwirkung kann durch eine leichte Deformation, insbesondere des Vormontageabschnittes 11, eine Klemmwirkung erzielt werden.

Weiter aus Fig. 2c ergibt sich am axialen Ende des Vormontageabschnittes 11 ein Axialanschlag 15, der von einem Ringabsatz, d.h. einer Durchmessererweiterung gebildet ist, wobei dieser Axialanschlag 15 zusammenwirken kann mit einem entsprechenden Gegenanschlag 16 am hinteren Ende des Zwischenabschnittes 7, wobei die Position von Axialanschlag 15 und Gegenanschlag 16 so auf die Axialerstreckung der Zinnen 6 abgestimmt ist, dass der maximale Aufspreizwinkel der Zinnen 6 definiert wird.

Weiter aus Fig. 2c ergibt sich ein konusförmiger Aufspreizabschnitt 17 zum Zusammenwirken mit der hinteren Stirnseite 18, insbesondere einer inneren stirnseitigen Kante der Zinnen 6, um diese in radialer Richtung aufzuspreizen.

Fig. 3 zeigt eine Verbindungsanordnung 19, umfassend eine von der Spreizhülse 1 gemäß den Fig. 1a bis 1c und einer Aufspreizhülse 2 gemäß den Fig. 2a bis 2c gebildeten Verankerungseinrichtung 3, wobei Spreizhülse 1 und Aufspreizhülse 2 in axialer Richtung durch radiales Ineinandergreifen unverlierbar formschlüssig aneinander gesichert sind. Hierzu ist der vordere, in der Montagerichtung M (Einführrichtung) gelegene Materialabschnitt 9 der Aufspreizhülse 2 in radialer Richtung nach außen in den Hinterschnitt, d.h. die radiale Vertiefung 8 hineindeformiert und verhindert somit ein axiales Verlieren der Spreizhülse 1 auch nach Entfernen eines Spanngewindeelementes 20. Dieses ist mit einem Außengewinde 21 mit dem korrespondierenden Innengewinde 4 der Spreizhülse 1 verschraubt und umfasst im Bereich des hinteren Endes einen Schraubenkopf 22, der sich in axialer Richtung seitlich einer Öffnung 23 an einem Bauteil 24 abstützt und dieses in axialer Richtung, d.h. in der Montagerichtung M gegen ein eine Montageöffnung 25 aufweisendes Trägerelement 26 presst. Zu erkennen ist, dass die Zinnen 6 der Spreizhülse 1 in radialer Richtung deformiert sind und sich in axialer Richtung auf der von den Bauteilen 24 abgewandten Seite des Trägerelements 26 an diesem abstützen. Aus Fig. 3 ergibt sich auch die Aufnahme der Aufspreizhülse 2 in der Montageöffnung 25, wobei die Rändelung 14 als Verdrehsicherung dient.

### Bezugszeichen

- 1: Spreizhülse
- 2: Aufspreizhülse
- 3: Verankerungseinrichtung
- 4: Innengewindeabschnitt
- 5: Innengewinde
- 6: Zinnen
- 7: Zwischenabschnitt
- 8: Vertiefung
- 9: Materialabschnitt
- 10: Aufnahmeabschnitt zur Aufnahme eines Vormontageabschnitts
- 11: Vormontageabschnitt
- 12: Fase
- 13: Anschlagfläche
- 14: Rändelung
- 15: Axialanschlag
- 16: Gegenanschlag
- 17: Aufspreizfläche, z.B. Konusfläche
- 18: Stirnseite
- 19: Verbindungsanordnung
- 20: Spanngewindeelement
- 21: Außengewinde
- 22: Schraubenkopf
- 23: Öffnung
- 24: Bauteil
- 25: Montageöffnung
- 26: Trägerelement
- 27: Zinnenabschnitt

- M: Montagerichtung

## Patentansprüche

1. Verankerungseinrichtung zum Befestigen eines Bauteils (24) an einem Trägerelement (26),
mit einer Spreizhülse (1), umfassend einen sich entlang einer Längsachse erstreckenden Innengewindeabschnitt (4) sowie an einem hinteren Endabschnitt der Spreizhülse (1) vorgesehene und sich axial entgegen einer Montagerichtung (M) erstreckende Zinnen (6), welche vorgesehen sind, um sich in einer Einbaulage radial nach außen über den Hülsenmantel abzukragen und an dem Trägerelement (26) entgegen der Montagerichtung (M) abzustützen,
und mit einer Aufspreizhülse (2) zum radialen Aufspreizen der Zinnen (6) bei einem gegeneinander Verspannen von Aufspreizhülse (2) und Spreizhülse (1), wobei die Aufspreizhülse (2) eine Durchgangsöffnung zur Aufnahme eines Spanngewindeelementes (20) zum gegeneinander Verspannen der Spreizhülse (1) und der Aufspreizhülse (2) aufweist,
**dadurch gekennzeichnet,**
**dass** Sicherungsmittel zur Ausbildung einer axialen Verliersicherung durch radiales Ineinandergreifen von Aufspreizhülse (2) und Spreizhülse (1) vorgesehen sind.

2. Verankerungseinrichtung nach Anspruch 1,
**dadurch gekennzeichnet,**
**dass** die Sicherungsmittel die Axialsicherung durch gegeneinander Verspannen von Aufspreizhülse (2) und Spreizhülse (1) ausbildend ausgebildet sind.

3. Verankerungseinrichtung nach Anspruch 2,
**dadurch gekennzeichnet,**
**dass** Aufspreizhülse (2) und Spreizhülse (1), insbesondere reibschlüssig, vor Ausbildung der axialen Verliersicherung aneinander vorfixiert sind.

4. Verankerungseinrichtung nach einem der vorhergehenden Ansprüche,
**dadurch gekennzeichnet,**
**dass** die Sicherungsmittel eine im Innenumfang der Spreizhülse (1) vorgesehene Vertiefung (8) umfassen, sowie einen dieser zugeordneten Materialabschnitt (9) der Aufspreizhülse (2), der durch gegeneinander Verspannen von Spreizhülse (1) und Aufspreizhülse (2) zur Ausbildung der axialen Verliersicherung radial in die Vertiefung (8) hinein verstellt und/oder verstellbar ist.

5. Verankerungseinrichtung nach Anspruch 4,
**dadurch gekennzeichnet,**
**dass** der Materialabschnitt (9) elastisch in die Vertiefung (8) eingefedert und/oder einfederbar ist oder bevorzugt plastisch in die Vertiefung (8) hineindeformiert und/oder hineindeformierbar ist.

6. Verankerungseinrichtung nach Anspruch 5,
**dadurch gekennzeichnet,**
**dass** der Materialabschnitt (9) an seinem Innenumfang abgestuft oder angefast ist und vorzugsweise an seinem Außenumfang durchgehend zylindrisch konturiert ist.

7. Verankerungseinrichtung nach einem der Ansprüche 5 oder 6,
**dadurch gekennzeichnet,**
**dass** dem Materialabschnitt (9) eine, bevorzugt oberhalb des Innengewindes (5) angeordnete, bevorzugt sich radial innen bis zum Innengewinde (5) erstreckende, bevorzugt nach radial außen abgeschrägte, Anschlagfläche (13) zugeordnet ist, gegen die der Materialabschnitt (9) durch Verspannen von Aufspreizhülse (2) und Spreizhülse (1) verstellbar und dadurch in radialer Richtung nach außen deformierbar ist.

8. Verankerungseinrichtung nach einem der vorhergehenden Ansprüche,
**dadurch gekennzeichnet,**
**dass** die Aufspreizhülse (2) zumindest im Bereich ihres hinteren, entgegen der Montagerichtung gelegenen Endes eine als Verdrehsicherung wirkende Oberflächenstruktur, insbesondere in Form einer Rändelung (14), aufweist.

9. Verankerungseinrichtung nach einem der vorhergehenden Ansprüche,
**dadurch gekennzeichnet,**
**dass** am Außenumfang der Aufspreizhülse (2) ein Konusabschnitt (17) zum Aufspreizen der Zinnen (6) vorgesehen ist.

10. Verankerungseinrichtung nach einem der vorhergehenden Ansprüche,
**dadurch gekennzeichnet,**
**dass** mit Axialabstand zu einem vorderen, in Richtung Spreizhülse (1) orientierten Ende der Aufspreizhülse (2) ein Axialanschlag (15) zum Anschlagen an einen Gegenanschlag (16) der Spreizhülse (1) vorgesehen ist, wobei die Axialerstreckung der Zinnen (6) derart auf die Relativposition von Axialanschlag (15) und Gegenanschlag (16) abgestimmt ist, dass bei aneinander anliegendem Axialanschlag (15) und Gegenanschlag (16) ein maximaler Spreizwinkel der Zinnen (6), gemessen zur Längsachse der Spreizhülse (1) von maximal 30°, vorzugsweise maximal 25°, noch weiter bevorzugt maximal 20° erreicht ist.

11. Verankerungseinrichtung nach einem der vorhergehenden Ansprüche,
**dadurch gekennzeichnet,**
**dass** die Aufspreizhülse (2) einen, bevorzugt zylindrischen, Vormontageabschnitt (11) aufweist, der zur Herstellung einer Vormontagereibschlussverbindung mit der Spreizhülse (1) einen Außendurchmesser aufweist, der zumindest näherungsweise dem Innendurchmesser eines, bevorzugt innenzylindrischen, Aufnahmeabschnitts (10) der Spreizhülse (1) zur Aufnahme des Vormontageabschnitts (11) aufweist.

12. Verbindungsanordnung umfassend eine Verankerungseinrichtung (3) nach einem der vorhergehenden Ansprüche und zusätzlich ein Spanngewindeelement (20) zum gegeneinander Verspannen der Spreiz- (1) und der Aufspreizhülse (2) der Verankerungseinrichtung (3), ein Trägerelement (26) mit einer Öffnung (25), in der die Aufspreizhülse (2), insbesondere drehfest aufgenommen ist und ein Bauteil (24), das mit der Verankerungseinrichtung (3) und dem Spanngewindeelement (20) an dem Trägerelement (26) festgelegt ist, wobei sich die Spreizhülse (1) auf der dem Bauteil (24) zugewandten Seite mit radial aufgeweiteten Zinnen (6) axial an dem Trägerelement (26) abstützt und wobei Aufspreizhülse (2) und Spreizhülse (1) durch radiales Ineinandergreifen axial aneinander gesichert sind.

13. Verfahren zum Befestigen eines Bauteils (24) an einem Trägerelement (26), insbesondere zur Herstellung einer Verbindungsanordnung (19) nach Anspruch 12, unter Verwendung einer Verankerungseinrichtung (3) nach einem der Ansprüche 1 bis 11, eines Spanngewindeelementes (20) sowie eines Trägerelementes (26), mit den Schritten:
• Einbringen der Spreizhülse (1) und der Aufspreizhülse (2) in eine Montageöffnung (25) des Trägerelementes (26), und
• gegeneinander Verspannen von Spreizhülse (1) und Aufspreizhülse (2) mittels des Spanngewindeelementes (20) und dadurch radiales Aufspreizen der Zinnen (6), derart, dass sich diese entgegen der Montagerichtung an dem Trägerelement (26) abstützen.

14. Verfahren nach Anspruch 13,
**dadurch gekennzeichnet,**
**dass** durch das axiale gegeneinander Verspannen die Aufspreizhülse (2) und die Spreizhülse (1) radial ineinandergreifen, insbesondere durch elastisches Einfedern eines Materialabschnittes (9) der Aufspreizhülse (2) in eine Vertiefung der Spreizhülse (1) oder durch plastisches Hineindeformieren des Materialabschnittes (9) der Aufspreizhülse (2) in die Vertiefung der Spreizhülse (1).

## Claims

1. An anchorage device for the purpose of fattening a component (24) to a load-bearing element (26),
with an expander sleeve (1), comprising an internally threaded section (4) expending along a longitudinal axis, and also crenellations (6), provided on a rear end section of the expander sleeve (1) and extending axially contrary to a direction of mounting (M); the crenellations are provided so as to incline radially outwards over the sleeve jacket in an installed position, and to be supported on the load-bearing element (26) contrary to the direction of mounting (M),
and with a spreader sleeve (2) for the purpose of spreading the crenellations (6) radially apart when the spreader sleeve (2) and the expander sleeve (1) are clamped against one another, wherein the spreader sleeve (2) has a passage opening for the purpose of accommodating a clamping thread element (20) for the purpose of clamping the expander sleeve (1) and the spreader sleeve (2) against one another,
**characterised in that**
securing means are provided for the purpose of forming and axial loss prevention device by the mutual radial engagement of the spreader sleeve (2) and the expander sleeve (1).

2. The anchorage device in accordance with Claim 1,
**characterised in that**
securing means are designed to form the axial securing device by clamping the spreader sleeve (2) and the expander sleeve (1) against one another.

3. The anchorage device in accordance with Claim 2,
**characterised in that**
the spreader sleeve (2) and the expander sleeve (1) are initially fixed to one another, in particular by means of friction, before the formation of the axial loss prevention device.

4. The anchorage device in accordance with one of the preceding claims,
**characterised in that**
the securing means comprise a recess (8) provided in the internal periphery of the expander sleeve (1), together with a material section (9) of the spreader sleeve (2) that is associated with the recess; as a result of the clamping of the expander sleeve (1) and the spreader sleeve (2) against one another for the purpose of forming the axial loss prevention mechanism the material section (9) is displaced, and/or can be displaced, radially into the recess (8).

5. The anchorage device in accordance with Claim 4,
**characterised in that**
the material section (9) is elastically sprung, and/or can be elastically sprung, into the recess (8), or preferably is plastically deformed, and/or can be plastically deformed, into the recess (8).

6. The anchorage device in accordance with Claim 5,
**characterised in that**
on its inner periphery the material section (9) is stepped or chamfered, and on its outer periphery preferably has a cylindrical contour throughout.

7. The anchorage device in accordance with one of the Claims 5 or 6,
**characterised in that**
a stop face (13), preferably arranged above the internal thread (5), preferably extending radially inwards as far as the internal thread (5), preferably tapered radially outwards, is associated with the material section (9); the material section (9) can be displaced against the stop face (13) by the clamping of the spreader sleeve (2) and the expander sleeve (1), and by this means can be deformed in the radial direction outwards.

8. The anchorage device in accordance with one of the preceding claims,
**characterised in that**
the spreader sleeve (2), at least in the region of its rear end, located contrary to the direction of mounting, has a surface structure acting as an anti-rotation device, in particular in the form of knurling (14).

9. The anchorage device in accordance with one of the preceding claims,
**characterised in that**
on the outer periphery of the spreader sleeve (2) a conical section (17) is provided for the purpose of spreading the crenellations (6) apart.

10. The anchorage device in accordance with one of the preceding claims,
**characterised in that**
an axial stop (15) is provided at an axial distance from a front end of the spreader sleeve (2), oriented in the direction of the expander sleeve (1), for the purpose of abutting against a counter-stop (16) of the expander sleeve (1), wherein the axial extent of the crenellations (6) is matched to the relative position of the axial stop (15) and counter-stop (16), such that when the axial stop (15) and counter-stop (16) abut against one another a maximum spreading angle of the crenellations (6) is achieved, measured with respect to the longitudinal axis of the expander sleeve (1), of a maximum of 30°, preferably a maximum of 25°, further preferably a maximum of 20°.

11. The anchorage device in accordance with one of the preceding claims,
**characterised in that**
the spreader sleeve (2) has a preferably cylindrical pre-mounting section (11), which for the purpose of manufacturing a pro-mounting friction connection with the expander sleeve (1) has an outer diameter that a least approximately corresponds to the inner diameter of a preferably internally cylindrical receiving section (10) of the expanded sleeve (1) for the purpose of deceiving the pre-mounting section (11).

12. A connection arrangement comprising an anchorage device (3) in accordance with one of the preceding claims, and in addition a clamping thread element (20) for the purpose of clamping the expander sleeve (1) and the spreader sleeve (2) of the anchorage device (3) against one another, a load-bearing element (26) with an opening (25), in which the spreader sleeve (2) is accommodated, in particular, such that it cannot rotate, and a component (24), which is fixed in position with the anchorage device (3) and the clamping thread element (20) on the load-bearing element (26), wherein the expander sleeve (1) is supported axially with radially expanded crenellations (6) on the load-bearing element (26), on the side facing towards the component (24), and wherein the spreader sleeve (2) and the expander sleeve (1) are axially secured to one another by means of a mutual radial engagement.

13. A method for the purpose of fastening a component (24) onto a load-bearing element (26), in particular for the purpose of manufacturing a connection arrangement (19) in accordance with Claim 12, with the use of an anchorage device (3) in accordance with one of the Claims 1 to 11, a clamping thread element (20), together with a load-bearing element (26), with the steps:
• insertion of the expander sleeve (1) and the spreader sleeve (2) into a mounting opening (25) of the load-bearing element (26), and
• clamping of the expander sleeve (1) and the spreader sleeve (2) against one another by means of the clamping thread element (20), and thereby radial spreading of the crenellations (6) such that the latter are supported on the load-bearing element (26) contrary to the direction of mounting.

14. The method in accordance with Claim 13,
**characterised in that**
as a result of the axial clamping against one another the spreader sleeve (2) and the expander sleeve (1) mutually engage radially, in particular by elastically springing a material section (9) of the spreader sleeve (2) into a recess of the expander sleeve (1), or by elastically deforming the material section (9) of the spreader sleeve (2) into the recess of the expander sleeve (1).

## Revendications

1. Dispositif d'ancrage pour fixer un élément de construction (24) sur un élément porteur (26),
avec une douille d'expansion (1) comprenant un tronçon de taraudage s'étendant le long d'un axe longitudinal (4), ainsi que des créneaux (6) prévus sur un tronçon d'extrémité arrière de la douille d'expansion (1) et s'étendant en direction axiale à l'encontre d'une direction de montage (M), lesquels sont prévus pour se replier dans une position de montage en direction radiale vers l'extérieur par-dessus l'enveloppe de la douille et pour s'appuyer sur l'élément porteur (26), à l'encontre de la direction de montage (M),
et avec une douille d'écartement (2) pour l'écartement radial des créneaux (6) lors d'une précontrainte l'une contre l'autre de la douille d'écartement (2) et de la douille d'expansion (1), la douille d'écartement (2) comportant un orifice de passage pour loger un élément fileté de serrage (20) pour contraindre l'une contre l'autre la douille d'expansion (1) et la douille d'écartement (2)*,*
**caractérisé en ce que**
le moyen de blocage est prévu pour créer un blocage anti-perte par engagement radial l'une dans l'autre de la douille d'écartement (2) et de la douille d'expansion (1).

2. Dispositif d'ancrage selon la revendication 1,
**caractérisé en ce que**
les moyens de blocage sont conçus pour créer le blocage axial par contrainte mutuelle de la douille d'écartement (2) et de la douille d'expansion (1).

3. Dispositif d'ancrage selon la revendication 2,
**caractérisé en ce que**
la douille d'écartement (2) et la douille d'expansion (1) sont préfixées l'une sur l'autre, notamment par friction avec de créer le blocage anti-perte axial.

4. Dispositif d'ancrage selon l'une quelconque des revendications précédentes,
**caractérisé en ce que**
les moyens de blocage comprennent un creux (8) prévu sur la périphérie intérieure de la douille d'expansion (1), ainsi qu'un tronçon de matière (9) associé à celui-ci de la douille d'écartement (2), qui par contrainte l'une contre l'autre de la douille d'expansion (1) et de la douille d'écartement (2), pour créer le blocage anti-perte axial s'ajuste et/ou est ajustable en direction radiale dans le creux (8).

5. Dispositif d'ancrage selon la revendication 4,
**caractérisé en ce que**
le tronçon de matière (9) s'enfonce et/ou peut s'enfoncer élastiquement dans le creux (8) ou de préférence se déforme et/ou peut se déformer plastiquement à l'intérieur du creux (8).

6. Dispositif d'ancrage selon la revendication 5,
**caractérisé en ce que**
le tronçon de matière (9) est cranté ou biseauté sur sa périphérie intérieure et présente de préférence un contour cylindrique traversant sur sa périphérie extérieure.

7. Dispositif d'ancrage selon l'une quelconque des revendications 5 ou 6,
**caractérisé en ce**
**qu'**au tronçon de matière (9) est associée une surface de butée (13), placée de préférence au-dessus du taraudage (5), s'étendant de préférence en direction radiale à l'intérieur jusqu'au taraudage (5), de préférence chanfreinée en direction radiale vers l'extérieur, contre laquelle le tronçon de ratière (9) est ajustable par contrainte de la douille d'écartement (2) et de la douille d'expansion (1) et déformable de ce fait en direction radiale vers l'extérieur.

8. Dispositif d'ancrage selon l'une quelconque des revendications précédentes,
**caractérisé en ce**
**qu'**au moins dans la région de son extrémité arrière, située à l'encontre de la direction de montage, la douille d'écartement (2) comporte une structure superficielle agissant en tant que blocage contre la torsion, notamment sous la forme d'un moletage (14).

9. Dispositif d'ancrage selon l'une quelconque des revendications précédentes,
**caractérisé en ce que**
sur la périphérie extérieure de la douille d'écartement (2) est prévu un tronçon conique (17) pour écarter les créneaux (6).

10. Dispositif d'ancrage selon l'une quelconque des revendications précédentes,
**caractérisé en ce**
**qu'**avec un écart axial par rapport à une extrémité avant de la douille d'écartement (2) orientée en direction de la douille d'expansion (1) il est prévu une butée axiale (15) destinée à buter contre une contre-butée (16) de la douille d'expansion (1), l'extension axiale des créneaux (6) étant adaptée à la position relative de la butée axiale (15) et de la contre-butée (16), de telle sorte que lorsque la butée axiale (15) et la contre-butée (16) sont adjacentes, un angle d'expansion maximal des créneaux (6), mesuré en direction de l'axe de longitudinal de la douille d'expansion (1) d'un maximum de 30°, de préférence d'un maximum de 25°, de manière encore plus préférée d'un maximal de 20° soit obtenu.

11. Dispositif d'ancrage selon l'une quelconque des revendications précédentes,
**caractérise en ce que**
la douille d'écartement (2) comporte un tronçon de prémontage (11), de préférence cylindrique qui pour créer une liaison de prémontage par friction avec la douille d'expansion (1) présente un diamètre extérieur qui correspond au moins approximativement au diamètre intérieur d'un tronçon de logement (10) à intérieur cylindrique de la douille d'expansion (1) pour le logement du tronçon de prémontage (11).

12. Agencement de liaison comprenant un dispositif d'ancrage (3) selon l'une quelconque des revendications précédentes et en supplément un élément fileté de serrage (20) pour contraindre l'une contre l'autre la douille d'expansion (1) et la douille d'écartement (2) du dispositif d'ancrage (3), un élément porteur (26) avec un orifice (25) dans lequel la douille d'écartement (2) est logée notamment en rotation solidaire et un élément de construction (24) qui est immobilisé à l'aide du dispositif d'ancrage (3) et de l'élément fileté de serrage (20) sur l'élément porteur (26), sur le côté qui fait face à l'élément de construction (24) par des créneaux (6) élargis en direction radiale, la douille d'expansion (1) s'appuyant axialement sur l'élément porteur (26) et la douille d'écartement (2) et la douille d'expansion (1) étant bloquées l'une contre l'autre en direction axiale par engagement radial l'une dans l'autre.

13. Procédé destiné à fixer un élément de construction (24) sur un élément porteur (26), notamment pour créer un agencement de liaison (19) selon la revendication 12 en utilisant un dispositif d'ancrage (3) selon l'une quelconque des revendications 1 à 11, un élément fileté de serrage (20), ainsi qu'un élément porteur (26), avec les étapes :
• introduction de la douille d'expansion (1) et de la douille d'écartement (2) dans un orifice de montage (25) de l'élément porteur (26) et
• contrainte l'une contre l'autre de la douille d'expansion (1) et de la douille d'écartement (2) au moyen de l'élément fileté de serrage (20) et de ce fait, écartement radial des créneaux (6) de telle sorte que ces derniers s'appuient sur l'élément porteur (26), à l'encontre de la direction de montage.

14. Procédé selon la revendication 13,
**caractérisé en ce que**
par la contrainte axiale l'une contre l'autre, la douille d'écartement (2) et la douille d'expansion (1) s'engagent l'une dans l'autre en direction radiale, notamment par enfoncement élastique d'un tronçon de matière (9) de la douille d'écartement (2) dans un creux de la douille d'expansion (1) pour par une déformation plastique du tronçon de matière (9) de la douille d'écartement (2) dans le creux de la douille d'expansion (1).
